# EUROPÄISCHE PATENTSCHRIFT

(11) **EP 4 119 911 B1**
(45) Veröffentlichungstag und Bekanntmachung des Hinweises auf die Patenterteilung: **29.05.2024**
(21) Anmeldenummer: 21186000.2
(22) Anmeldetag: 16.07.2021
(51) Int. Cl.: G01K 1/024, G01K 1/16

(54) **EINSTECH-SPEISENTHERMOMETER**
SINGLE STEM THERMOMETER
THERMOMÈTRE ALIMENTAIRE PLONGEANT

(43) Veröffentlichungstag der Anmeldung: 18.01.2023
(73) Patentinhaber: Vorwerk & Co. Interholding GmbH, 42270 Wuppertal (DE)
(72) Erfinder: Stein, Dr. Matthias, 45472 Mühlheim an der Ruhr (DE); Serndt, Mirco, 42555 Velbert (DE); Schulz, Fabian, 46147 Oberhausen (DE)
(74) Vertreter: Gille Hrabal Partnerschaftsgesellschaft mbB Patentanwälte

(56) Entgegenhaltungen:
- EP-A1- 1 624 724
- DE-A1-102007 018 245
- DE-A1-102010 020 778
- US-A1- 2018 353 003

## Beschreibung

Die Erfindung betrifft ein elektrisches Einstech-Speisenthermometer.

Eine Speise ist eine Nahrung, die zubereitet wird. Die Zubereitung kann das Erwärmen oder Erhitzen umfassen. Beispiele für eine Nahrung, die durch Erwärmen oder Erhitzen zubereitet werden kann, sind Fleisch, Gemüse oder Teig für Backwaren.

Ein Speisenthermometer ist ein Temperaturmessgerät, welches dafür bestimmt und geeignet ist, Temperaturen in einem Nahrungsmittel während seiner Zubereitung zu messen. Ein Speisenthermometer kann daher Temperaturen messen, die bei der Zubereitung einer Speise auftreten können. Deutlich davon abweichende Temperaturen können nicht gemessen werden. Außerdem ist ein Speisenthermometer den Umgebungsbedingungen gewachsen, die während einer Zubereitung einer Speise auftreten können.

In der Regel werden bei der Zubereitung einer Speise Temperaturen von weniger als 200°C erreicht. Es können aber auch Temperaturen von 350°C erreicht werden, so zum Beispiel für das Backen einer Pizza. Temperaturen von mehr als 350°C werden grundsätzlich nicht überschritten. Ein Speisenthermometer im Sinne der vorliegenden Erfindung ist daher so eingerichtet, dass Temperaturen oberhalb von 400°C, vorzugsweise oberhalb von 300°C, besonders bevorzugt oberhalb von 250°C, nicht mehr gemessen werden können. Grundsätzlich ist das Speisenthermometer so eingerichtet, dass dieses in einem herkömmlichen Backofen eingesetzt werden kann, also bei Temperaturen von bis zu 250°C.

Ein Speisenthermometer im Sinne der vorliegenden Erfindung ist nicht so ausgelegt, dass sehr tiefe Temperaturen damit gemessen werden können wie zum Beispiel Temperaturen deutlich unterhalb von Minustemperaturen, wie diese in haushaltsüblichen Gefriertruhen oder Gefrierschränken erreicht werden. Ein Speisenthermometer im Sinne der vorliegenden Erfindung ist daher nicht so ausgelegt, dass es Temperaturen von weniger als -70°C messen kann. Grundsätzlich ist ein Speisenthermometer im Sinne der vorliegenden Erfindung so ausgelegt, dass es Temperaturen unterhalb von -50°C nicht mehr messen kann, weil Speisen in der Regel unter Zufuhr von Wärme hergestellt werden und sehr tiefe Temperaturen lediglich für ein Einfrieren einer Speise angewendet werden.

Ein Speisenthermometer im Sinne der vorliegenden Erfindung kann einer Dampfatmosphäre widerstehen. Ein Speisenthermometer ist daher grundsätzlich wasserdicht gekapselt. Ein Speisenthermometer im Sinne der vorliegenden Erfindung ist resistent gegenüber üblichen Zutaten einer Speise wie zum Beispiel Säure von Zitronen oder Essig.

Ein Speisenthermometer ist ein Einstech-Speisenthermometer im Sinne der vorliegenden Erfindung, wenn es dafür bestimmt und geeignet ist, in eine Nahrung hineingestochen zu werden, um eine Temperatur im Inneren der Nahrung messen zu können. Ein Einstech-Speisenthermometer weist einen langgestreckten Messfühler mit einem spitzen oder zumindest einem sehr dünnen Ende auf, um den Messfühler auch in relativ feste Nahrung wie Fleisch hineinstechen zu können. Der Messfühler umfasst einen Sensor, mit dem eine Temperatur gemessen werden kann. Ein Einstech-Speisenthermometer weist ein Griffteil auf, das nicht dafür bestimmt ist, in die Speise hineingesteckt zu werden. Das Griffteil kann von einem Benutzer ergriffen werden, um das Einstech-Speisenthermometer aus einer Nahrung bzw. Speise wieder herausziehen zu können. Das Griffteil kann ebenfalls einen Sensor umfassen, mit dem eine Temperatur gemessen werden kann. Es kann dann auch die Temperatur außerhalb einer Nahrung bzw. Speise gemessen werden.

Ein Einstech-Speisenthermometer im Sinne der vorliegenden Erfindung ist ein elektrisches Einstech-Speisenthermometer, wenn es für seinen Betrieb elektrischen Strom benötigt. Ein elektrisches Einstech-Speisenthermometer kann daher eine Batterie umfassen oder aber an eine externe elektrische Energiequelle angeschlossen werden, um mit elektrischem Strom versorgt zu werden.

Druckschrift DE 10 2007 018 245 A1 offenbart eine Temperatursonde für einen Ofen, bei der mittels einer Temperaturdifferenz zweier paralleler Scheiben elektrische Energie für den Betrieb von Sendemitteln erzeugt wird. Druckschrift US 2018 / 0 353 003 A1 beschreibt ein System zur Überwachung einer Speisentemperatur in einer Hochtemperaturumgebung, das einen Dualthermofühler zur gleichzeitigen Messung einer Lufttemperatur und einer Speisentemperatur enthält. Druckschrift DE 10 2010 020 778 A1 offenbart einen autonomen Temperaturtransmitter zum Einsatz in verfahrenstechnischen Anlagen, der teilweise in ein Prozessgefäß hineinragt. Druckschrift EP 1 624 724 A1 beschreibt einen Sensor und ein System zum Detektieren eines Parameters während einer thermischen Behandlung eines Lebensmittelprodukts.

Es ist Aufgabe der vorliegenden Erfindung, die Temperatur in einer Speise während der Zubereitung unabhängig von einer externen Stromversorgung messen zu können.

Zur Lösung der Aufgabe dient ein Speisenthermometer mit den Merkmalen des ersten Anspruchs. Vorteilhafte Ausgestaltungen ergeben sich aus den abhängigen Ansprüchen.

Das zur Lösung der Aufgabe bereitgestellte elektrische Einstech-Speisenthermometer umfasst einen langgestreckten Messfühler. Es gibt einen Temperatursensor innerhalb des Messfühlers. Mit Messfühler ist der Teil des Speisenthermometers gemeint, der dazu bestimmt und geeignet ist, in ein Nahrungsmittel hineingestochen zu werden, um im Inneren des Nahrungsmittels eine Temperatur messen zu können.

Der Messfühler ist langgestreckt, wenn dieser sehr viel länger als breit und tief ist bzw. der Durchmesser sehr viel kleiner als die Länge des Messfühlers ist. Im Querschnitt kann der Messfühler kreisrund sein. Der Messfühler kann aber im Querschnitt beispielsweise oval, quadratisch oder mehreckig sein. Der Messfühler verläuft grundsätzlich geradlinig, um leicht in ein Nahrungsmittel hineingesteckt und leicht wieder herausgezogen werden zu können. Der Messfühler kann zylinderförmig sein. Der Messfühler kann beispielsweise wenigstens 3, 4 oder 5 cm lang sein. Der Messfühler kann beispielsweise nicht mehr als 12, 10 oder 8 cm lang sein. Der Messfühler kann beispielsweise maximal 2 cm oder 1 cm breit und/oder tief sein bzw. der Durchmesser kann beispielsweise maximal 2 cm oder 1 cm betragen. Da das Gehäuse des Messfühlers eine große Oberfläche aufweist und grundsätzlich dünnwandig ist, kann dieses aus einem Metall bestehen, das nicht in Bezug auf wärmeleitende Eigenschaften optimiert ist. Das Gehäuse des Messfühlers kann daher teilweise oder vollständig aus Edelstahl bestehen. Es kann aber auch teilweise oder vollständig aus Aluminium bestehen.

Nicht zum Messfühler gehört ein Griffteil des Speisenthermometers. Ein Griffteil ist dazu bestimmt und geeignet, ergriffen zu werden, um den Messfühler in ein Nahrungsmittel hineinzustechen und den Messfühler aus dem Nahrungsmittel bzw. der daraus hergestellten Speise wieder herauszuziehen. Ein Griffteil umfasst daher in der Regel eine Hülle oder Ummantelung aus einem thermisch isolierenden Material wie Kunststoff. Damit eine Temperatur im Inneren eines Nahrungsmittels bzw. einer Speise gemessen werden kann, gibt es zumindest einen Temperatursensor innerhalb des Messfühlers. Ein Temperatursensor ist ein elektrisches oder elektronisches Bauelement, das ein elektrisches Signal als Maß für die Temperatur liefert. Der Temperatursensor kann beispielsweise einen elektrischen Leiter umfassen, dessen von der Temperatur abhängiger elektrischer Widerstand gemessen wird. Der gemessene elektrische Widerstand ist dann das Maß für die Temperatur.

Es gibt einen Energiewandler, der eine Temperaturdifferenz in einen elektrischen Strom umwandelt. Es gibt einen Wärmeleiter, der mit dem Energiewandler wärmeleitend verbunden ist. Befindet sich der Energiewandler innerhalb des Messfühlers, so führt der Wärmeleiter aus dem Messfühler heraus. Befindet sich der Energiewandler außerhalb des Messfühlers, so führt der Wärmeleiter in den Messfühler hinein. Konstruktiv ist zu bevorzugen, dass sich der Energiewandler im Messfühler befindet, da der Messfühler auf eine gute Wärmeübertragung ausgelegt ist.

Wird ein Speisenthermometer in ein Nahrungsmittel hineingestochen und wird das Nahrungsmittel dann beispielsweise in einem Backofen erhitzt, so bleibt der Messfühler vergleichsweise kühl im Vergleich zur Temperatur außerhalb des Nahrungsmittels. Diese Temperaturdifferenz nützt das Speisenthermometer mithilfe des Wärmeleiters und des Energiewandlers aus, um einen elektrischen Strom zu erzeugen. Der so erzeugte elektrische Strom kann dann dazu genutzt werden, um eine Batterie des Speisenthermometers zu laden und/oder eine Steuerelektronik des Speisenthermometers mit elektrischem Strom zu versorgen.

Der Wärmeleiter erstreckt sich vorzugsweise von dem Energiewandler bis zu einem freien Ende des Speisenthermometers, um die Stromerzeugung zu optimieren. Ist der Messfühler beispielsweise mit einem Griffteil unmittelbar verbunden und befindet sich der Energiewandler im Messfühler, dann führt der Wärmeleiter vorzugsweise durch das Griffteil hindurch und zwar wenigstens durch eine Hülle oder Ummantelung des Griffteils, die aus einem thermisch isolierenden Material besteht. Der Wärmeleiter kann dann das Ende des Griffteils bilden. Dieses Ende des Griffteils ist grundsätzlich ein stumpfes Ende. Ist der Messfühler beispielsweise mit einem Griffteil unmittelbar verbunden und befindet sich der Energiewandler im Griffteil, dann führt der Wärmeleiter vorzugsweise durch den gesamten Messfühler hindurch, bis der Wärmeleiter das entsprechende Ende des Messfühlers erreicht hat. Dieses Ende des Speisenthermometers ist grundsätzlich ein spitzes Ende.

Der Wärmeleiter besteht vorzugsweise aus Kupfer, da Kupfer ein sehr guter Wärmeleiter ist. Es kann dann die genannte Temperaturdifferenz besonders gut zur Erzeugung eines elektrischen Stroms ausgenutzt werden. Anstelle von Kupfer kommt auch Silber in Betracht. Weniger geeignet aber immer noch möglich ist ein Metall wie Gold, Aluminium oder Wolfram.

Der Wärmeleiter ist vorzugsweise vollständig oder zumindest überwiegend stabförmig, um sich innerhalb des Gehäuses des Speisenthermometers geeignet weit erstrecken zu können. Der Wärmeleiter kann sich beispielsweise von einem hinteren Drittel des Speisenthermometers bis zu einem vorderen Drittel des Speisenthermometers erstrecken, um Wärme zwecks Stromerzeugung geeignet transportieren zu können. Der Energiewandler ist dann in einem der beiden Drittel angeordnet.

Die Länge des Wärmeleiters ist vorzugsweise wenigstens halb so lang, vorzugsweise wenigsten 2/3 so lang wie die Länge des Speisenthermometers, um geeignet Wärme für eine Stromerzeugung transportieren zu können.

Vorzugsweise dient der Wärmeleiter nicht nur der Leitung von Wärme, um den Bauraum klein halten zu können. So kann das Speisenthermometer eine Funkeinrichtung umfassen und der Wärmeleiter eine Antenne der Funkeinrichtung sein. Durch die Funkeinrichtung können dann gemessene Temperaturen drahtlos an ein externes Empfangsgerät übermittelt werden. Der Wärmeleiter kann ein elektrischer Leiter sein, über den erzeugter Strom zu einer Batterie und/oder zu einem elektrischen Verbraucher des Speisenthermometers fließen kann. Der Wärmeleiter kann als Halterung für andere Komponenten des Speisenthermometers dienen. An dem Wärmeleiter sind dann ein oder mehrere andere Komponenten wie zum Beispiel ein elektrischer Leiter befestigt. Dieser elektrische Leiter kann beispielsweise einen Temperatursensor mit einer Steuerelektronik verbinden.

Als Energiewandler ist ein Stromkreis mit zwei verschiedenen elektrischen Leitern für die Erzeugung von elektrischem Strom mittels Seebeck-Effekt vorhanden. Mit Seebeck-Effekt ist die Entstehung einer Spannung in einem Stromkreis mit zwei unterschiedlichen Leitern bei einer Temperaturdifferenz an den Kontaktstellen gemeint. Der Wärmeleiter kann an eine Kontaktstelle angrenzen, um diese während des Betriebs auf eine andere Temperatur zu bringen als die andere Kontaktstelle.

In einer bevorzugten Ausgestaltung ist der Energiewandler ein Hohlzylinder. Dadurch können verbessert unterschiedliche Temperaturen an Kontaktstellen erreicht werden. Der Wirkungsgrad für die Stromerzeugung kann so gesteigert werden. Dies gilt insbesondere dann, wenn auch der Messfühler zylinderförmig ist. Dann kann der Hohlzylinder unmittelbar an das Gehäuse des Messfühlers angrenzen, damit daran angrenzende Kontaktstellen in optimaler Weise temperiert werden. Weist der Messfühler nur näherungsweise eine Zylinderform auf, so ist es von Vorteil, dass auch der Energiewandler eine entsprechende Form aufweist. Der Energiewandler ist dann also der Zylinderform ebenfalls lediglich angenähert.

In einer bevorzugten Ausgestaltung führt der Wärmeleiter in den Hohlzylinder hinein, um in optimierter Weise temperieren zu können. Der Wirkungsgrad der elektrischen Stromerzeugung kann so verbessert werden.

Der Wärmeleiter grenzt an eine der beiden Kontaktstellen an, um die gewünschte Temperierung zu optimieren. Der Wärmeleiter kann dann lediglich durch einen elektrischen Isolator von der einen Kontaktstelle des Energiewandlers getrennt sein. An der einen Seite des elektrischen Isolators liegt dann der Wärmeleiter unmittelbar an und kontaktiert diesen also. An der anderen Seite des elektrischen Isolators liegt dann die Kontaktstelle unmittelbar an.

Der elektrische Isolator kann beispielsweise aus einem gut wärmeleitenden keramischen Material bestehen.

An den Wärmeleiter kann innerhalb des Messfühlers ein thermischer Isolator angrenzen. Es wird dadurch erreicht, dass der Wärmeleiter während der Zubereitung einer Speise mit darin eingestecktem Thermometer nicht gekühlt wird. Der Wirkungsgrad der elektrischen Stromerzeugung kann so weiter verbessert werden.

Die andere Kontaktstelle des Energiewandlers kann über einen weiteren, beispielsweise aus Kupfer bestehenden Wärmeleiter mit dem Gehäuse des Temperaturfühlers wärmeleitend verbunden sein, wenn sich der Energiewandler im Messfühler befindet. Der weitere Wärmeleiter kann wiederum durch einen elektrischen Isolator von der anderen Kontaktstelle getrennt sein. Die andere Kontaktstelle kann aber auch unmittelbar an das Gehäuse des Messfühlers angrenzen, um besonders geeignet temperiert zu werden. Zwischen der anderen Kontaktstelle und dem Gehäuse des Messfühlers kann sich dann noch ein elektrischer Isolator befinden. Wiederum kann so der Wirkungsgrad zur Erzeugung von elektrischem Strom verbessert werden. Befindet sich der Energiewandler im Griffteil, so kann der weitere Wärmeleiter mit einem Gehäuseteil des Griffteils verbunden sein. Der weitere Wärmeleiter kann also den Teil des Gehäuses kontaktieren, in dem sich der Wärmeleiter befindet, um die elektrische Stromerzeugung zu verbessern. Das Vorsehen von ein oder zwei Wärmeleitern ist nicht zwingend erforderlich, um Strom zu erzeugen. Der Energiewandler kann nicht erfindungsgemäß so dimensioniert und angeordnet sein, dass eine Kontaktstelle in dem Bereich des Speisenthermometers liegt, der während der Zubereitung einer Speise vergleichsweise kühl gehalten wird und die andere Kontaktstelle in dem Bereich des Speisenthermometers, die während der Zubereitung einer Speise stärker erhitzt wird. Die eine Kontaktstelle kann also dann im Messfühler angeordnet sein und die andere Kontaktstelle außerhalb des Messfühlers. Aus Fertigungsgründen ist die erfindungsgemäße Lösung mit den ein oder zwei Wärmeleitern jedoch vorteilhaft.

Ein Wärmeleiter kann einer der beiden elektrischen Leiter des Energiewandlers sein. Der Messfühler kann ein spitzes Ende aufweisen. Der Messfühler kann dann besonders leicht in ein Nahrungsmittel hineingestochen werden.

Das Speisenthermometer kann ein Griffteil mit einem aus Kunststoff bestehenden Griffbereich umfassen. Das Griffteil dient dazu, ein Speisenthermometer zu ergreifen und in ein Nahrungsmittel hineinzustechen oder es aus dem Nahrungsmittel bzw. der Speise wieder herauszuziehen.

Das Speisenthermometer kann stiftförmig sein. Diese Form ist zur Realisierung der Erfindung besonders geeignet.

Der Energiewandler kann mit einer Batterie des Speisenthermometers elektrisch verbunden sein. Der durch den Energiewandler erzeugte elektrische Strom kann dann für ein Aufladen der Batterie genutzt werden.

Nachfolgend wird die Erfindung anhand von Beispielen näher erläutert.

Es zeigen
- Figur 1:: stiftförmiges elektrisches Einstech-Speisenthermometer während einer Speisenzubereitung;
- Figur 2:: Schnitt durch ein elektrisches Einstech-Speisenthermometer;
- Figur 3:: Ausführungsform eines Energiewandlers für ein elektrisches Einstech-Speisenthermometer;
- Figur 4:: Ausführungsform eines Energiewandlers für ein elektrisches Einstech-Speisenthermometer;
- Figur 5:: Schnitt durch einen Energiewandler.

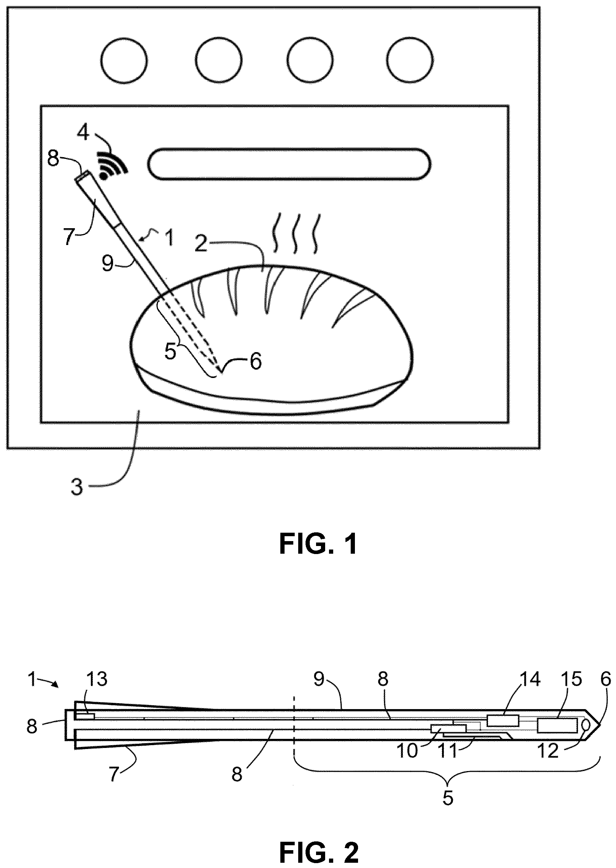

Die Figur 1 zeigt ein stiftförmiges Speisenthermometer 1, welches in einen Brotteig 2 hineingesteckt ist. Der Brotteig 2 befindet sich in einem Backofen 3 und wird erhitzt. Das Speisenthermometer 1 misst Temperaturen und übermittelt gemessene Temperaturen durch eine Funkeinheit 4 an ein externes Gerät. Durch das externe Gerät kann die Brotzubereitung gesteuert werden. Der vordere Teil des Speisenthermometers 1, der in das Nahrungsmittel 2 hineingesteckt werden soll, ist der Messfühler 5 des Speisenthermometers 1. Innerhalb des Messfühlers 5 befindet sich zumindest ein Temperatursensor. Damit der Messfühler 5 leicht in ein Nahrungsmittel 2 hineingesteckt werden kann, umfasst der Messfühler 5 eine Spitze 6. Der Messfühler 5 kann auf ein vorderes Drittel oder eine vordere Hälfte des Speisenthermometers 1 beschränkt sein. Der hintere Teil des Speisenthermometers 1 umfasst eine als Griff 7 dienende Ummantelung aus einem wärmeisolierenden Kunststoffmaterial wie Gummi oder Elastomer. Das hintere Ende des Speisenthermometers 1 wird durch einen Wärmeleiter 8 gebildet. Der Wärmeleiter 8 erstreckt sich innerhalb des Gehäuses 9 in Richtung Messfühler 5. Der Wärmeleiter 8 kann beispielsweise aus Kupfer bestehen. Das Gehäuse 9 kann beispielsweise aus Edelstahl oder aus Aluminium bestehen.

Das Thermometer 1 ist dazu bestimmt und geeignet, in ein Nahrungsmittel 2 hineingestochen zu werden. Es ist folglich ein Einstech-Speisenthermometer.

Auch das hintere Ende des Speisenthermometers 1 kann ein oder mehrere Temperatursensoren umfassen, um auch die Umgebungstemperatur während der Zubereitung einer Speise messen zu können.

Die Figur 2 zeigt einen Schnitt durch ein elektrisches Einstech-Speisenthermometer 1, welches dem in der Figur 1 gezeigten elektrischen Einstech-Speisenthermometer 1 ähnelt. Innerhalb des Gehäuses 9 und zwar im vorderen Drittel befindet sich ein Energiewandler 10. Der Energiewandler 10 ist wie ein Peltierelement aufgebaut. Der im Wesentlichen stabförmige Wärmeleiter 8 kontaktiert den Energiewandler 10 und zwar derart, dass dieser an eine elektrische Kontaktstelle des Energiewandlers 10 angrenzt. An die andere elektrische Kontaktstelle des Energiewandlers 10 grenzt ein anderer Wärmeleiter 11 an. Der andere Wärmeleiter 11 ist außerdem mit dem Gehäuse 9 verbunden. Auch der andere Wärmeleiter 11 kann aus Kupfer bestehen. Bei der Spitze 6 befindet sich ein Temperatursensor 12. Ein Temperatursensor 13 befindet sich beim hinteren Ende des Speisenthermometers 1. Die beiden Temperatursensoren 12 und 13 sind elektrisch mit einer Steuerelektronik 14 des Speisenthermometers 1 verbunden. Der Energiewandler 10 ist elektrisch mit einer Batterie 15 verbunden, die sich zwischen dem Temperatursensor 12 und der Steuerelektronik 14 befindet. Die Steuerelektronik 14 umfasst eine drahtlose Funkeinheit. Die Steuerelektronik 14 kann elektrisch mit dem Wärmeleiter 8 verbunden sein. Der im Wesentlichen stabförmige Wärmeleiter 8 dient dann als Antenne für die Funkeinheit der Steuerelektronik 14. Die Steuerelektronik 14 kann beispielsweise zwischen dem Energiewandler 10 und der Batterie 15 angeordnet sein.

Der Messfühler 5 des Speisenthermometers 1 soll in eine Nahrung hineingestochen werden. Ist dies geschehen und befindet sich die Nahrung 2 in einem erhitzten Ofen 3, so wird das hintere Ende 8 des Speisenthermometers 1 erhitzt. Über den im Wesentlichen stabförmigen Wärmeleiter 8 wird die Hitze zu der einen ersten elektrischen Kontaktstelle des Energiewandlers 10 transportiert.

Der Messfühler 5 wird durch die Nahrung 2 thermisch abgeschirmt. Der Teil des Gehäuses 9, der zum Messfühler 5 gehört, wird daher zunächst kaum erhitzt und bleibt verhältnismäßig kühl. Über den anderen Wärmeleiter 11 wird daher die zweite elektrische Kontaktstelle des Energiewandlers 10 kühl gehalten. Der Energiewandler 10 erzeugt dann elektrischen Strom, mit dem die Batterie 15 aufgeladen werden kann.

Durch den Temperatursensor 12 kann die Temperatur im Inneren einer Nahrung gemessen werden. Durch den Temperatursensor 13 kann die Umgebungstemperatur während der Zubereitung einer Speise gemessen werden.

An dem stabförmigen Wärmeleiter 8 kann ein elektrischer Leiter angebracht sein, der den Temperatursensor 13 beim hinteren Ende des Einstech-Speisenthermometers mit der Steuerelektronik 14 verbindet. Der Wärmeleiter 8 kann also auch dazu genutzt werden, um ein oder mehrere elektrische Leitungen geeignet zu fixieren

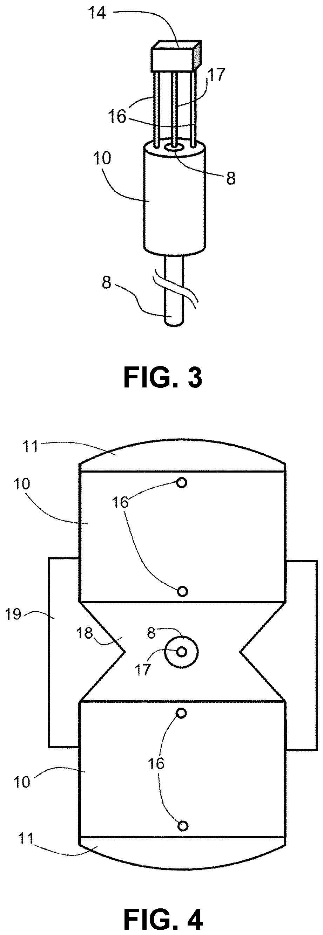

In der Figur 3 wird ein hohlzylinderförmiger Energiewandler 10 mit einem im Wesentlichen stabförmigen Wärmeleiter 8 für ein Einstech-Speisenthermometer gezeigt. Der stabförmige Wärmeleiter 8 führt in den hohlzylinderförmigen Energiewandler 10 hinein, um einer elektrischen Kontaktstelle des Energiewandlers 10 Wärme zuzuführen. Elektrische Anschlüsse 16 verbinden den Energiewandler 10 mit der Steuerelektronik 14, um die Steuerelektronik 14 mit Strom zu versorgen. Ein elektrischer Leiter 17 ist ebenfalls mit der Steuerelektronik 14 sowie dem Wärmeleiter 8 verbunden. Der Wärmeleiter 8 kann nun beispielsweise wiederum als Antenne für eine Funkeinheit der Steuerelektronik 14 dienen. Die Hohlzylinderform ermöglicht die Nutzung einer deutlich größeren Fläche zur Stromgewinnung. Außerdem kann die Hohlzylinderform unmittelbar großflächig das Gehäuse des Speisenthermometers 1 im Bereich des Temperaturfühlers kontaktieren. Es sind so höhere Wirkungsgrade im Vergleich zu der zuvor beschriebenen Ausführungsformen möglich.

In der Figur 4 wird eine Aufsicht auf übereinander angeordnete Energiewandler 10 für ein Einstech-Speisenthermometer gezeigt, die durch eine wärmeleitende Schicht 18 voneinander getrennt sind. In die wärmeleitende Schicht 18 führt ein stabförmiger Wärmeleiter 8 hinein. Die wärmeleitende Schicht 18 kann wie der stabförmige Wärmeleiter 8 aus Kupfer bestehen. Andere gut wärmeleitende Materialien sind aber ebenfalls möglich. Seitlich grenzen an die wärmeleitende Schicht 18 und teilweise an den Energiewandler 10 thermisch isolierende Schichten 19 an. Durch die thermisch isolierenden Schichten 19 wird vermieden, dass sich die Bereiche der Energiewandler 10 aufheizen, die kühl gehalten werden sollen. Die thermisch isolierenden Schichten 19 können beispielsweise in der Art einer Wölbung oder Spitze in die wärmeleitende Schicht 18 hineinreichen, um verbessert thermisch zu isolieren. Wärmeleitende Schichten 11 grenzen an der Oberseite und an der Unterseite an den jeweiligen Energiewandler 10 an. Die Oberfläche kann jeweils bogenförmig verlaufen, um einen guten Kontakt zum angrenzenden Gehäuse des Einstech-Speisenthermometers herzustellen. Die in der Figur 4 gezeigten Energiewandler 10 können quaderförmig sein. Es können zum Beispiel paarweise weitere Energiewandler davor und/oder dahinter angeordnet sein.

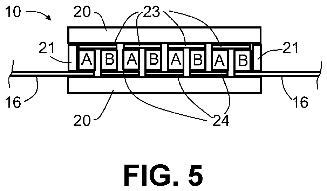

In der Figur 5 wird im Schnitt ein Energiewandler 10 gezeigt. Der Energiewandler 10 umfasst zwei äußere keramische Schichten 20, die gut wärmeleitend sind. Die beiden keramischen Schichten 20 können von einem wärmeisolierenden, hinreichend temperaturstabilen Material 21 an den Außenseiten voneinander thermisch getrennt sein. Innerhalb des Energiewandlers 10 gibt es abwechselnd zum Beispiel aus Metall bestehende Leiter A und B. Das Material des Leiters A unterscheidet sich vom Material des Leiters B. Nur die Enden der elektrischen Leiter A und B sind paarweise sowie wie gezeigt versetzt elektrisch miteinander verbunden. Es entstehen so zwei verschiedene Kontaktstellen 23 und 24. Die eine Kontaktstelle 23 grenzt an die eine äußere keramische Schicht 20. Die andere Kontaktstelle 24 grenzt an die andere äußere keramische Schicht 20. Werden die zwei verschiedenen keramischen Schichten 20 unterschiedlich temperiert, so wird ein elektrischer Strom erzeugt. Elektrische Leiter 16 führen aus dem Energiewandler 10 heraus und können beispielsweise eine Batterie kontaktieren, um diese aufladen zu können.

Die keramischen Schichten 20 können eben sein. Der Energiewandler 10 kann dann quaderförmig sein. Die Schichten 20 können aber auch die Außen- und Innenhülle eines Hohlzylinders sein. Der Energiewandler 10 kann dann hohlzylinderförmig sein.

## Patentansprüche

1. Elektrisches Einstech-Speisenthermometer (1) mit einem langgestreckten Messfühler (5), mit einem Temperatursensor (12) innerhalb des Messfühlers (5), mit einem Energiewandler (10), der aus einer Temperaturdifferenz einen elektrischen Strom erzeugen kann, mit einem Wärmeleiter (8), der mit dem Energiewandler (10) wärmeleitend verbunden ist, wobei der Energiewandler (10) zwei verschiedene elektrische Leiter (A, B) mit zwei Kontaktstellen (23, 24) für die Erzeugung von elektrischem Strom mittels Seebeck-Effekt umfasst, **dadurch gekennzeichnet, dass** der Wärmeleiter (8) aus dem Messfühler (5) herausführt, wenn der Energiewandler (10) innerhalb des Messfühlers (5) angeordnet ist und der Wärmeleiter (8) in den Messfühler (5) hineinführt, wenn der Energiewandler (10) außerhalb des Messfühlers (5) angeordnet ist, wobei der Wärmeleiter (8) an eine der beiden Kontaktstellen (23, 24) angrenzt, wobei die andere Kontaktstelle (23, 24) über einen weiteren, aus Kupfer bestehenden Wärmeleiter (11) mit einem Gehäuse (9) des Speisenthermometers (1) wärmeleitend verbunden ist oder unmittelbar an das Gehäuse (9) des Speisenthermometers (1) angrenzt.

2. Speisenthermometer (1) nach einem der vorhergehenden Ansprüche, **dadurch gekennzeichnet, dass** der Wärmeleiter (8) aus Kupfer besteht.

3. Speisenthermometer (1) nach einem der vorhergehenden Ansprüche, **dadurch gekennzeichnet, dass** der Wärmeleiter (8) vollständig oder zumindest überwiegend stabförmig ist.

4. Speisenthermometer (1) nach einem der vorhergehenden Ansprüche, **dadurch gekennzeichnet, dass** sich der Wärmeleiter (8) von einem hinteren Drittel des Speisenthermometers (1) bis zu einem vorderen Drittel des Speisenthermometers (1) erstreckt und der Energiewandler (10) in einem der beiden Drittel angeordnet ist.

5. Speisenthermometer (1) nach einem der vorhergehenden Ansprüche, **dadurch gekennzeichnet, dass** das Speisenthermometer (1) eine Funkeinrichtung umfasst und der Wärmeleiter (8) eine Antenne der Funkeinrichtung oder ein elektrischer Leiter ist, der mit einer Elektronik des Speisenthermometers (1) oder mit einer Batterie des Speisenthermometers (1) verbunden ist.

6. Speisenthermometer (1) nach einem der vorhergehenden Ansprüche, **dadurch gekennzeichnet, dass** der Energiewandler (10) hohlzylinderförmig ist.

7. Speisenthermometer (1) nach einem der vorhergehenden Ansprüche, **dadurch gekennzeichnet, dass** der Wärmeleiter (8) in die Hohlzylinderform hineingeführt ist.

8. Speisenthermometer (1) nach einem der vorhergehenden Ansprüche, **dadurch gekennzeichnet, dass** an den Wärmeleiter (8) innerhalb des Messfühlers (5) ein thermischer Isolator (19) grenzt.

9. Speisenthermometer (1) nach einem der vorhergehenden Ansprüche, **dadurch gekennzeichnet, dass** der Messfühler (5) ein spitzes Ende aufweist.

10. Speisenthermometer (1) nach einem der vorhergehenden Ansprüche, **dadurch gekennzeichnet, dass** das Speisenthermometer (1) ein Griffteil mit einem aus Kunststoff bestehenden Griffbereich (7) umfasst.

11. Speisenthermometer (1) nach einem der vorhergehenden Ansprüche, **dadurch gekennzeichnet, dass** das Speisenthermometer (1) stiftförmig ist.

12. Speisenthermometer (1) nach einem der vorhergehenden Ansprüche, **dadurch gekennzeichnet, dass** das Speisenthermometer (1) eine Batterie umfasst und der Energiewandler (10) mit der Batterie des Speisenthermometers (1) elektrisch verbunden ist.

## Claims

1. Electrical penetration food thermometer (1) having an elongated probe (5), a temperature sensor (12) within said probe (5), an energy converter (10) capable of generating an electrical power from a temperature difference, a heat conductor (8) which is thermally conductively connected to the energy converter (10), wherein the energy converter (10) comprises two different electrical conductors (A, B) with two contact points (23, 24) for the generation of electrical power by means of Seebeck effect, **characterized in that** the heat conductor (8) leads out of the probe (5) when the energy converter (10) is arranged inside the probe (5) and the heat conductor (8) leads into the probe (5) when the energy converter (10) is arranged outside the probe (5), wherein the heat conductor (8) adjoins one of the two contact points (23, 24), wherein the other contact point (23, 24) is thermally conductively connected to the housing (9) of the food thermometer (1) via a further heat conductor (11) consisting of copper or directly adjoins the housing (9) of the food thermometer (1).

2. Food thermometer (1) according to one of the preceding claims, **characterized in that** the heat conductor (8) consists of copper.

3. Food thermometer (1) according to one of the preceding claims, **characterized in that** the heat conductor (8) is completely or at least predominantly rod-shaped.

4. Food thermometer (1) according to one of the preceding claims, **characterized in that** the heat conductor (8) extends from a rear third of the food thermometer (1) to a front third of the food thermometer (1) and the energy converter (10) is arranged in one of the two thirds.

5. Food thermometer (1) according to one of the preceding claims, **characterized in that** the food thermometer (1) comprises a radio device and the heat conductor (8) is an antenna of the radio device or an electrical conductor connected to electronics of the food thermometer (1) or to a battery of the food thermometer (1).

6. Food thermometer (1) according to one of the preceding claims, **characterized in that** the energy converter (10) is hollow-cylindrical in shape.

7. Food thermometer (1) according to one of the preceding claims, **characterized in that** the heat conductor (8) is led into the hollow cylindrical shape.

8. Food thermometer (1) according to one of the preceding claims, **characterized in that** a thermal insulator (19) adjoins the heat conductor (8) within the probe (5).

9. Food thermometer (1) according to one of the preceding claims, **characterized in that** the probe (5) has a pointed end.

10. Food thermometer (1) according to one of the preceding claims, **characterized in that** the food thermometer (1) comprises a handle part with a handle portion (7) consisting of plastic.

11. Food thermometer (1) according to one of the preceding claims, **characterized in that** the food thermometer (1) is pen-shaped.

12. Food thermometer (1) according to one of the preceding claims, **characterized in that** the food thermometer (1) comprises a battery and the energy converter (10) is electrically connected to the battery of the food thermometer (1).

## Revendications

1. Thermomètre alimentaire à piquer électrique (1) avec une sonde de mesure allongée (5), avec un capteur de température (12) à l'intérieur de la sonde de mesure (5), avec un convertisseur d'énergie (10) qui peut générer un courant électrique à partir d'une différence de température, avec un conducteur de chaleur (3), qui est relié de manière thermoconductrice au convertisseur d'énergie (10), dans lequel le convertisseur d'énergie (10) comprend deux conducteurs électriques (A, B) différents avec deux points de contact (23, 24) pour la génération de courant électrique au moyen de l'effet Seebeck, **caractérisé en ce que**
le conducteur thermique (8) sort de la sonde de mesure (5) lorsque le convertisseur d'énergie (10) est disposé à l'intérieur de la sonde de mesure (5) et que le conducteur thermique (8) rentre dans la sonde de mesure (5) lorsque le convertisseur d'énergie (10) est disposé à l'extérieur de la sonde de mesure (5), dans lequel le conducteur thermique (8) est adjacent à l'un des deux points de contact (23, 24), dans lequel l'autre point de contact (23, 24) est relié de manière thermoconductrice à un boîtier (9) du thermomètre alimentaire (1) par l'intermédiaire d'un autre conducteur thermique (11) constitué de cuivre ou est directement adjacent au boîtier (9) du thermomètre alimentaire (1).

2. Thermomètre alimentaire (1) selon l'une des revendications précédentes, **caractérisé en ce que** le conducteur thermique (8) est constitué de cuivre.

3. Thermomètre alimentaire (1) selon l'une des revendications précédentes, **caractérisé en ce que** le conducteur thermique (8) est entièrement ou au moins principalement en forme de tige.

4. Thermomètre alimentaire (1) selon l'une des revendications précédentes, **caractérisé en ce que** le conducteur de chaleur (8) s'étend d'un tiers arrière du thermomètre alimentaire (1) jusqu'à un tiers avant du thermomètre alimentaire (1) et **en ce que** le convertisseur d'énergie (10) est disposé dans l'un des deux tiers.

5. Thermomètre alimentaire (1) selon l'une des revendications précédentes, **caractérisé en ce que** le thermomètre alimentaire (1) comprend un dispositif radio et le conducteur de chaleur (8) est une antenne du dispositif radio ou un conducteur électrique qui est relié à une électronique du thermomètre alimentaire (1) ou à une batterie du thermomètre alimentaire (1).

6. Thermomètre alimentaire (1) selon l'une des revendications précédentes, **caractérisé en ce que** le convertisseur d'énergie (10) est en forme de cylindre creux.

7. Thermomètre alimentaire (1) selon l'une des revendications précédentes, **caractérisé en ce que** le conducteur thermique (8) est inséré dans la forme cylindrique creuse.

8. Thermomètre alimentaire (1) selon l'une des revendications précédentes, **caractérisé en ce qu'**un isolateur thermique (19) est adjacent au conducteur thermique (8) à l'intérieur de la sonde de mesure (5).

9. Thermomètre alimentaire (1) selon l'une des revendications précédentes, **caractérisé en ce que** la sonde de mesure (5) présente une extrémité pointue.

10. Thermomètre alimentaire (1) selon l'une des revendications précédentes, **caractérisé en ce que** le thermomètre alimentaire (1) comprend une partie de préhension avec une zone de préhension (7) en matière plastique.

11. Thermomètre alimentaire (1) selon l'une des revendications précédentes, **caractérisé en ce que** le thermomètre alimentaire (1) est en forme de stylo.

12. Thermomètre alimentaire (1) selon l'une des revendications précédentes, **caractérisé en ce que** le thermomètre alimentaire (1) comprend une batterie et que le convertisseur d'énergie (10) est relié électriquement à la batterie du thermomètre alimentaire (1).
